(19) Europäisches Patentamt
European Patent Office
Office européen des brevets

(11) EP 3 633 836 A1

(12) EUROPEAN PATENT APPLICATION

(43) Date of publication:
08.04.2020 Bulletin 2020/15

(51) Int Cl.:
$H02M\ 1/15^{(2006.01)}$     $H02M\ 5/458^{(2006.01)}$
$H02M\ 1/12^{(2006.01)}$

(21) Application number: 18198324.8

(22) Date of filing: 02.10.2018

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: Siemens Aktiengesellschaft
80333 München (DE)

(72) Inventor: Mukherjee, Nilanjan
Macclesfield, SK10 2ES (GB)

(54) **ELECTRONIC INDUCTOR CIRCUIT**

(57) An electronic inductor circuit comprises: input/output terminals; a first active bridge circuit arranged between the input/output terminals and comprising an AC-AC bridge; and a second active bridge circuit comprising an AC-DC bridge; and an interlinking connection between the output of the first active bridge circuit and the second active bridge circuit. The interlinking connection comprises an inductive energy storage device in series connection between the first active bridge circuit and the second active bridge circuit.

## FIG 3B

EP 3 633 836 A1

**Description**

The present disclosure relates to electronic inductor circuits and to associated methods of controlling an electronic inductor circuits. In particular the disclosure is concerned with an electronic inductor circuits and associated methods of controlling electronic inductor circuits that are useful for DC link filtering in power conversion systems such as variable speed drives.

**Background**

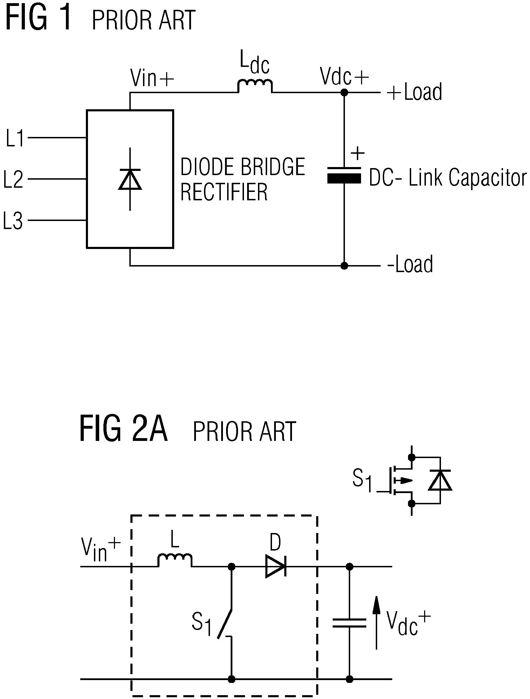

Power conversion systems, such as variable speed drives that convert an AC input to a PWM AC output to drive a motor, commonly use a diode rectifier as the first conversion stage in order to generate DC on a DC link that feeds an inverter. Figure 1 shows a typical front end configuration for a drive, in which supply lines L1, L2, L3 from an AC grid feed a diode bridge rectifier. The diode bridge rectifier is a cost effective way to produce DC for the DC link, but has the disadvantage that it draws a poor quality current from the AC grid. This may corrupt the supply on the AC grid, and thus make it difficult to meet international standards for acceptable harmonic distortion such as IEC61000-3-12. Passive filtering using a series inductor Ldc on the DC link, as shown in Figure 1, can reduce harmonic distortion, but often requires a large physical inductor in order to be effective. Even then, good harmonic distortion reduction is not guaranteed because the shape of the input current supplied to the inductor may vary according to the impedance conditions on the AC grid, meaning that the inductor may not have a suitable value to perform its smoothing function.

To address the limitations of fixed physical inductors for harmonic reduction at the input, a number of switching circuits have been proposed. An active front-end rectifier can be used, or an additional DC-DC converter provided between the rectified grid voltage and the DC link. However, these types of solutions can introduce significant losses, as well as increasing system cost because the switching elements need to be rated at full DC link voltage.

Another known approach is to have an electronic circuit which can behave as an inductor in the series path between the rectified grid voltage and the DC link.

Active control of an electronic inductor which imitates the characteristics of a large physical inductor can improve harmonic distortion performance, and potentially also enables power factor correction. This approach is generally lower cost than employing a full active front end in place of a diode bridge rectifier because the semiconductor components of the electronic inductor typically do not face the full DC link voltage and therefore devices with lower ratings can be used. Also, this type of solution is relatively easy to implement without major modification needed to conventional drive topology.

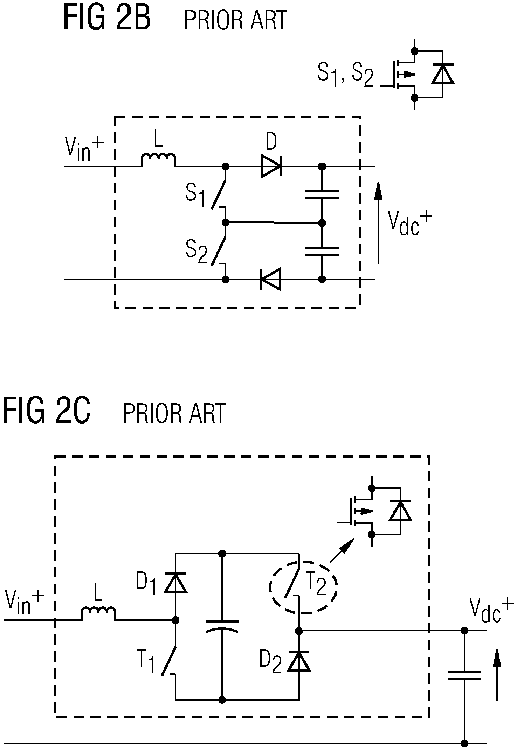

Figures 2A, 2B and 2C show example switching circuits suitable for use in a drive, in the form of a single-switch DC-DC boost converter, a double switch boost DC-DC converter. The Figure 2A and 2B circuits typically still rely on high voltage semiconductor components. As such the switching circuits may also be physically large, employing large through-hole devices for the switching elements, and may introduce significant switching losses when operating at full DC link current.

Another technically feasible solution previously proposed is an electronic smoothing inductor, as shown in Figure 2C. Although the electronic smoothing inductor configuration of Figure 2C has good performance characteristics compared to the switching circuits of Figures 2A and 2B, the switching components in Figure 2C require mandatory closed loop control, adding to cost and complexity. Additionally in this arrangement it is difficult to tune the emulated inductance online because of possible control stability issues.

Hence an electronic inductor circuit which can emulate the performance of a physical inductor is desirable, in a relatively small and inexpensive package, with simple control architecture, and with increased flexibility to tune the equivalent series inductance while online in order to achieve better performance under varying grid impedance conditions.

**Summary**

According to the present disclosure there is provided an apparatus and a method as set forth in the appended claims. Other features of the invention will be apparent from the dependent claims, and the description which follows.

Accordingly there may be provided an electronic inductor circuit comprising: input/output terminals; a first active bridge circuit arranged between the input/output terminals and comprising an AC-AC bridge; and a second active bridge circuit comprising an AC-DC bridge; and an interlinking connection between the output of the first active bridge circuit and the second active bridge circuit, wherein the interlinking connection comprises an inductive energy storage device in series connection between the first active bridge circuit and the second active bridge circuit.

In one example the second active bridge circuit comprises a full bridge. In one example the second active bridge circuit comprises with four uni-directional switches each paired with an anti-parallel diode. In one example the second active bridge circuit comprises field effect switches, for example MOSFET switches. In one example the second active bridge circuit comprises a capacitive energy storage element at its output side. In one example the second active bridge is coupled to a capacitive energy storage element, arranged to maintain DC potential at the output side of the second active bridge circuit.

In one example the first active bridge circuit comprises a half bridge. In one example the first active bridge circuit comprises with two bi-directional switches, that is, switches which are operable to block voltage in both directions and to carry current in both directions. In one example the bi-directional switches comprise two field effect switching elements, for example MOSFET switching elements. In one example the bi-directional switches comprise two switching elements inversely connected in series with one another. In one example the switching elements are each paired with an anti-parallel diode. In one example the bi-directional switches comprise two an N channel field effect switching elements. In one example the first active bridge circuit comprises paired capacitive energy storage elements at its input side, in parallel with the two bi-directional switches.

In one example the electronic inductor further comprises a controller arranged to in use control switching operations of the switches in the first active bridge circuit and the second active bridge circuit. In one example the controller is arranged to in use control a phase difference between the between the switching cycles of the first active bridge circuit and the second active bridge circuit to thereby control the effective emulated inductance produced by the electronic inductor. In one example the controller is arranged to control a phase difference between the between the switching cycles of the first active bridge circuit and the second active bridge to control power flow through the inductor. In one example embodiment the controller is arranged to control the switching cycle frequency of the first active bridge circuit and second active bridge circuit to thereby control the effective emulated inductance produced by the electronic inductor. In one example the controller is arranged to provide open loop control, for example using an analogue control circuit.

Accordingly there may be provided a power conversion system including an electronic inductor circuit as herein-described.

In one example the power conversion system operates with a DC link between an input supply and a load, and the electronic inductor circuit is provided as a series element on the DC link.

In one example the power conversion system comprises a passive front end between an AC grid and the DC link. In one example the DC link provides power to a drive comprising an inverter arranged to provide PWM control of a motor.

Accordingly there is provided a method of operating an electronic inductor, the method comprising use of an electronic inductor circuit as herein-described.

In one example the method comprises operating the first active bridge circuit and second active bridge circuit with a fixed switching cycle period. In one example the method comprises operating the first active bridge circuit and the second active bridge circuit at a fixed switching cycle duty ratio. In one example the method comprises operating the first active bridge circuit and the second active bridge circuit with the same switching cycle duty ratio as each other. In one example the duty ratio is the range of around 30% to around 70%, for example in the range of about 40% to about 60%. In one example the duty ratio is about 50%. In one example the duty ratio is in the range 30% to 70%, for example in the range 40% to 60%. In one example the duty ratio is 50%. In one example the method comprises operating the first active bridge circuit and the second active bridge circuit so that their switching cycles are phase shifted by a fixed amount relative to one another. In one example the switching cycles are phase shifted by 90°. In one example embodiment the method comprises controlling the switching cycle frequency of the first active bridge circuit and second active bridge circuit to thereby control the effective emulated inductance produced by the electronic inductor. In one example the method comprises controlling the phase difference between the switching cycles of the first active bridge circuit and the second active bridge circuit, and/or the switching cycle frequency in response to harmonic variation experienced at the input supply when the electronic inductance is in use as part of a power conversion system as herein-described.

**Brief Description of the Drawings**

Examples of the present disclosure will now be described with reference to the accompanying drawings, in which:

Figure 1 shows a prior art configuration for the input side of a drive;
Figures 2A-2C show example prior art electronic inductor configurations;
Figure 3A shows a power conversion system including an electronic inductor circuit according to an example embodiment;
Figure 3B shows the electronic inductor circuit of Figure 3A;
Figure 4 shows a simplified conceptual model of the electronic inductor circuit to explain the operation thereof;
Figure 5 shows a simplified equivalent circuit corresponding to the model of Figure 4;
Figure 6 shows voltage and current waveforms of the electronic inductor circuit over a switching period;
Figure 7 shows a comparison of the size of physical inductor required as between the electronic inductor circuit according to an example embodiment and the prior art circuit of Figure 2C; and

Figure 8 shows a method of operating an electronic inductor according to an example embodiment.

**Detailed Description**

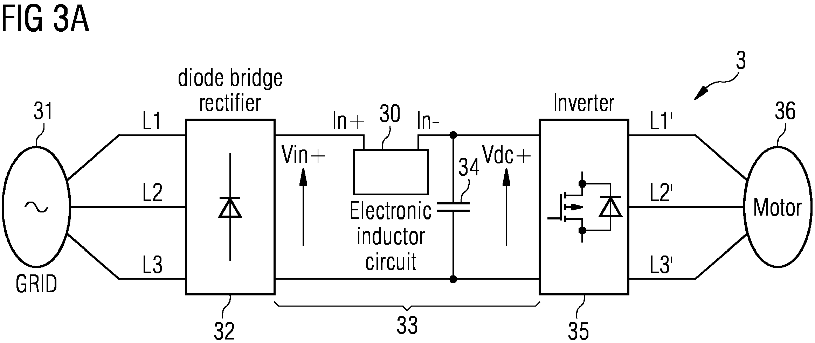

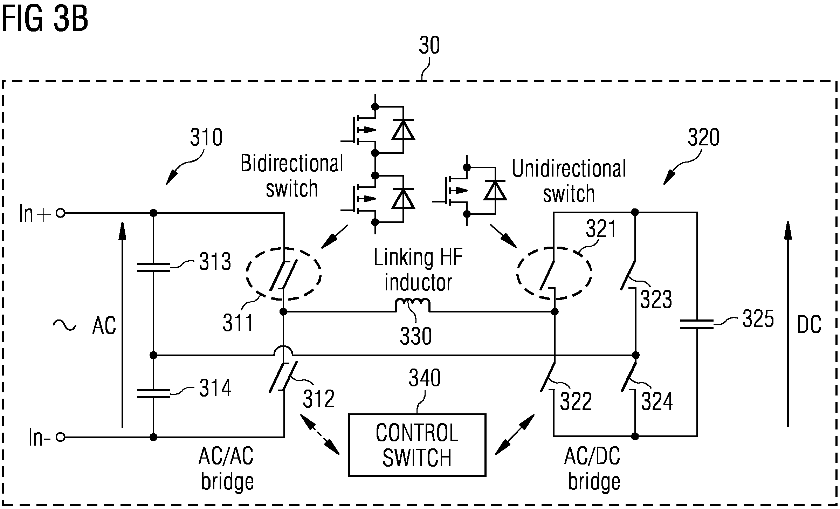

Figure 3A shows a power conversion system 3 including an electronic inductor circuit 30 according to an example embodiment. The power conversion system 3 is fed from an AC grid 31 by three supply lines L1, L2, L3. The input side of the power conversion system 3 comprises a diode bridge rectifier 32. The diode bridge rectifier 32 feeds a DC link 33 that includes a parallel connected DC link capacitor 34, and in series connection the electronic inductor circuit 30 as described in more detail below in relation to Figure 3B.

Voltage across the DC link capacitor 34 is supplied to an inverter 35 at the output side of the power conversion system 3, the inverter comprising a PWM drive for a motor 36 that is coupled thereto by output lines L1', L2', L3'.

As will be appreciated, the series connection of the electronic inductor circuit 30 on the DC link 33, between the output of the diode bridge rectifier 32 and the DC link capacitor 34, is equivalent to the arrangement shown in Figure 1 aside from the fact that the Figure 1 arrangement uses a fixed physical inductor rather than the electronic inductor circuit 30. As described below, the electronic inductor circuit 30 has a number of advantageous properties that make it well suited as a replacement for a fixed physical inductor in power conversion systems such as that shown in Figure 3A.

Figure 3B shows an electronic inductor 30 according to an example embodiment. The electronic inductor 30 comprises input/output terminals In+, In-, which are also shown in Figure 3A to identify the connection of the electronic inductor 30 in series configuration on the DC link 33 of the power conversion system 3.

The electronic inductor 30 further comprises a first active bridge circuit 310. The first active bridge circuit 310 is arranged between the input/output terminals In+, In- and comprises an AC-AC half bridge including, in one arm of the bride, two bi-directional four quadrant MOSFET switches 311,312. As shown in the insert, the bi-directional MOSFET switches 311,312 are conveniently implemented as two inversely connected switching elements in series, each provided with an anti-parallel diode. In the other arm of the half bridge, the first active bridge circuit comprises paired capacitors 313,314.

The second active bridge circuit 320 of the electronic inductor 30 comprises an AC-DC full bridge. The second active bridge circuit 320 is operatively coupled to the first active bridge circuit 310, and comprises four standard uni-directional switches 321,322,323,324, each implemented as a MOSFET switch paired with an anti-parallel diode. A capacitor 325 is connected at the output side of the second active bridge circuit, to maintain DC potential at the output side of the second active bridge circuit and to enable suitable energy transfer between the first and second active bridge circuits 310,320.

In the interlinking connection between the output of the first active bridge circuit 310 and the input of the second active bridge circuit 320 a series inductor 330 is provided. The inductor 330 decouples the first active bridge circuit 310 and the second active bridge circuit 320, producing only a small voltage drop there-between because it carries only higher frequency AC, according to the switching cycle of the first active bridge circuit 310 and the second active bridge circuit 320.

As described below, by controlling the switching cycles of the first active bridge circuit 310 and the second active bridge circuit 320 the electronic inductor 30 operates as an inductive energy store between the input/output terminals In+, In-. The first active bridge circuit 310 and the second active bridge circuit 320 acts as two active voltage sources with a finite phase shift. By applying a phase shift between the switching cycles of the first active bridge circuit 310 and the second active bridge circuit 320 it is possible to control the power flow between the first active bridge circuit 310 and the second active bridge circuit 320 and in this way to emulate inductor characteristics. A control switch 340 is operatively coupled to the switching elements of the first active bridge circuit 310 and the second active bridge circuits 320 to control their operation.

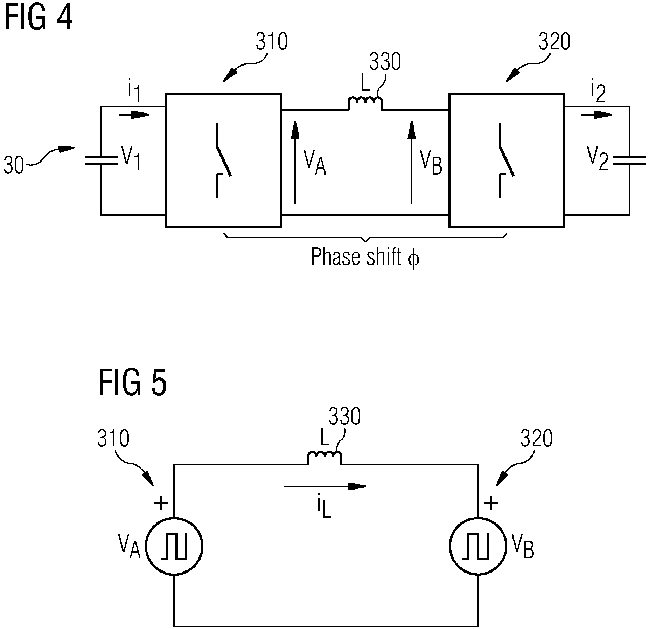

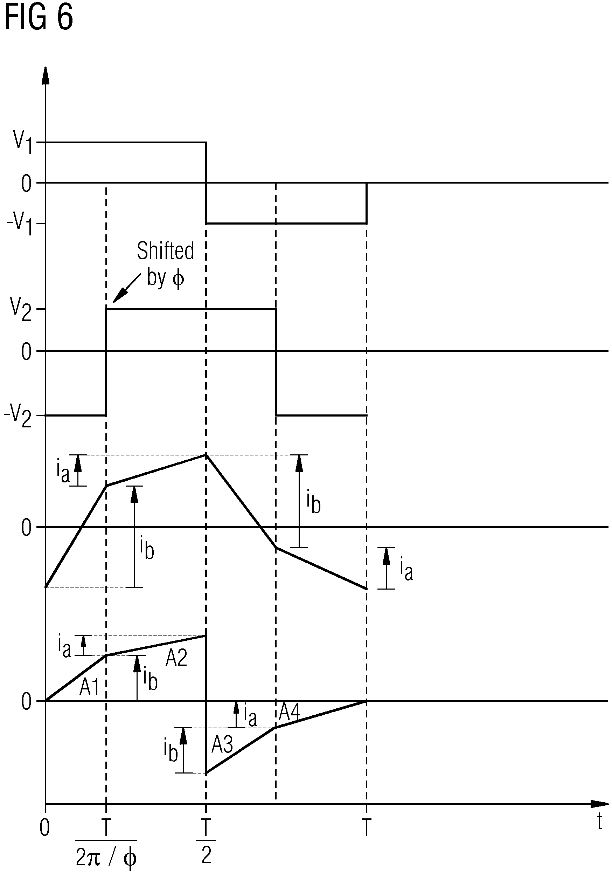

Figure 4 shows a simplified conceptual model of the electronic inductor circuit to explain the operation thereof and Figure 5 shows a simplified equivalent circuit corresponding to the model of Figure 4. Figure 6 shows voltage and current waveforms of the electronic inductor circuit 30 over a switching period.

In use, both the first active bridge circuit 310 and the second active bridge circuit 320 are switched at a fixed duty ratio of 0.5, i.e. a 50% duty cycle. One control variable to determine the effective inductance seen at the input/output terminals In+, In- is the phase shift Ø between the switching cycle in the first active bridge circuit 310 and the switching cycle in the second active bridge circuit 320.

With the electronic inductor 30 in use in a power conversion system 3 or the like, V1 and V2 in Figure 4 are variable, but when the switching elements of the first active bridge circuit 310 and second active bridge circuit 320 are switched with sufficiently high, they may be considered essentially constant within a switching period. On this basis the circuit of Figure 4 can be considered a DC-DC switching power converter, based on how it operates over a short time interval. However, in order to control the effective inductance seen at the input/output terminals In+, In- the switching events between the source bridge, i.e. the first active bridge circuit 310, and the load bridge, i.e. the second active bridge circuit 320 are phase shifted.

The voltages VA and VB are effectively square waves, meaning that the average power can be calculated as below, with reference to the voltage and current waveforms shown in Figure 6.

The current through the inductor 330, iL, comprises two parts, ia and ib.

$$i_a = \frac{v_1 + v_2}{L} \frac{T}{\frac{2\pi}{\phi}} \tag{1}$$

$$i_b = \frac{v_1 - v_2}{L} \frac{T}{\frac{2\pi}{\phi}} \tag{2}$$

The average current would be:

$$\langle i_1 \rangle = \frac{A_1 + A_2 - A_3 - A_4}{T} \tag{3}$$

Assuming negligible power loss between the first active bridge circuit 310 and the second active bridge circuit, the power, P, is therefore:

$$P = V_1 \langle i_1 \rangle = V_2 \langle i_2 \rangle \tag{4}$$

To relate these back to the characteristics seen at the input/output terminals In+, In-, the power P can be considered with reference to the conductance g. Generally,

$$P = V_1 \langle i_1 \rangle = g V_1 V_2$$

These can be solved for g, such that

$$g = \frac{\phi - \frac{\phi^2}{\pi}}{\omega L} \qquad \text{Where } \omega = 2\pi f_s \tag{5}$$

From this, the value of the effective inductance seen at the at the input/output terminals In+, In-, Lin is given by

$$L_{in} = \frac{C}{g^2} = f(\phi, T) \tag{6}$$

It can be seen from equation (6) above that the effective inductance is a function of switching time/frequency and the phase shift Ø. In the relationship above, C refers to the capacitance of the capacitor 325 in the second active bridge circuit.

Accordingly, it becomes possible to devise simple control arrangements to drive the first active bridge circuit 310 and the second active bridge circuit 320 to achieve a desired inductance in the steady state, and also to tune the inductance in response to variable characteristics of a circuit in which the electronic inductor circuit 30 operates.

By way of example, typical component values and operating parameters for an electronic inductor circuit according to an example embodiment will now be described in the context of a power conversion system that draws power from an AC grid for delivery to a motor via a drive that includes a PWM inverter. In this discussion, a comparison is made with the prior art arrangement of Figure 2C, in the context of replacing the electronic inductor configuration of Figure 2C with an electronic inductor circuit according to an example embodiment.

For a three phase AC grid with 400V input voltage and a desired 560V on the DC link, the input current drawn by diode bridge rectifier at the front end may be around 30A, based on a typical mechanical efficiency of 75%. For the electronic inductor circuit according to an example embodiment:

$$Vin_{+Pk} = 400 \times \sqrt{2} = 565V$$

$$Vin_{+min} = 565 \times \sin\left(\frac{\pi}{3}\right) = 489V$$

$$Vdc_{+} = 565 \times 0.954 = 540V$$

Therefore, the RMS voltage across the electronic inductor circuit would, when used in the configuration of Figure 2C, 25V. This is equivalent to v1 being $25 \times \sqrt{2} \approx 35V$.

Therefore, according to equations (1) and (2) above, the value of the series inductor 330, L, can be calculated:

$$L = \frac{2v_1}{i_a + i_b} \frac{T}{\frac{2\pi}{\phi}} \qquad (7)$$

With a phase shift of $\pi/2$ between the switching cycles of the first active bridge circuit 310 and the second active bridge circuit 320, for example, it is possible to rearrange equation (7) to give the inductance L as:

$$L = \frac{v_1}{i_a + i_b} \frac{T}{\frac{\pi}{\frac{\pi}{2}}} = \frac{v_1}{i_a + i_b} \frac{T}{2} \qquad (8)$$

By substituting in values of v1 at 35V, switching frequency f at 100 kHz, and determining a peak current of 40A as within operating range, based on 10A ripple on top of the 30A draw, the inductance of the series inductor 330 is calculated as:

$$L = \left(\frac{565 - 540}{40}\right)\sqrt{2}\frac{10\mu}{2} = 4.5\mu H$$

This inductance can be provided by a component of small size. Compared to the electronic inductor configuration of Figure 2C, the reduction in size of the physical inductor is almost a five times reduction. The equivalent calculations for the Figure 2C arrangement are given below.

$$\text{Mains Input Voltage} = 410\text{V AC}$$

$$Vc = 100\text{V}$$

$$f_{PWM} = 100\,\text{kHz}$$

Thus:

$$Vin_{+Pk} = 400 \times \sqrt{2} = 565\text{V}$$

$$Vin_{+min} = 565 \times \sin\left(\frac{\pi}{3}\right) = 489\text{V}$$

$$Vdc_+ = 565 \times 0.954 = 540\text{V}$$

For Vin+min:

$$V_{L@Vin+min} = Vin_{+min} + Vc - Vdc_+ = 489 + 100 - 540 = 49$$

$$D = 1 - \frac{V_L}{Vc} = 1 - \frac{49}{100} = 0.51$$

$$L = \frac{D \times V_L}{f \times \Delta i} = \frac{0.51 \times 49}{100 \times 10^3 \times 47 \times 10^{-6}} = 25\mu\text{H}$$

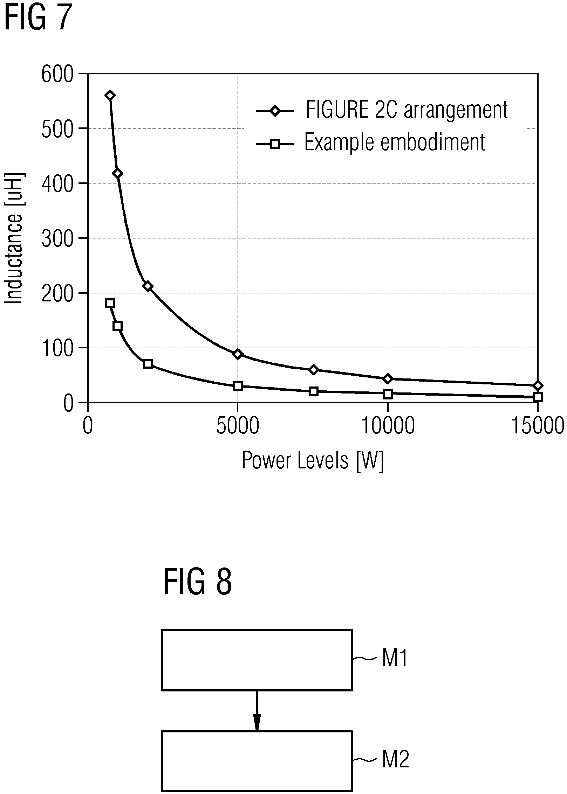

Extending this out by way of comparison Figure 7 shows typical requirements for physical inductor as between the Figure 2C arrangement an example embodiment, in use in a power conversion system as described.

Figure 8 shows a method of operating an electronic inductor according to an example embodiment. The method is performed on an electronic inductor circuit as herein-described. In a first step, Mode 1 the method comprises operating the first active bridge circuit and second active bridge circuit under the control of a control switch that outputs switching control signals with a fixed switching cycle period and fixed switching cycle duty ratio, but such that their switching cycles are operated at a fixed phase difference with respect to one another. In optional step Mode 2 the method further comprises controlling the phase difference of the switching cycle between first active bridge circuit and second active bridge circuit to thereby control the effective emulated inductance produced by the electronic inductor circuit. The method may further comprise controlling the switching frequency either independently or, or together with controlling the phase difference.

As will be appreciated from the foregoing discussion, example embodiments have a significant advantage over certain prior art alternatives in terms of reducing the size of physical inductor needed to achieve a desired level of harmonic distortion performance. The switching elements are not exposed to the full DC link voltage, and as such may be implemented by lower cost and/or smaller/surface mount devices, for example GaN devices. Even though additional switching elements are required, lower specification of the devices means that overall cost is not necessarily increased.

The control architecture is simple, and can be implemented without complicated bootstrapping arrangements and without the need for a dedicated digital controller or closed loop feedback.

By appropriate phase control it is possible to nullify the effect of grid impedance variation even with fixed switching frequency. Grid current measurements can be measured and readily converted into a phase shift control signal for this purpose. If desired, switching frequency control is also possible, meaning that there are two degrees of freedom are available, thus increasing flexibility in design when aiming to hit particular performance targets.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

**Claims**

1. An electronic inductor circuit comprising: input/output terminals; a first active bridge circuit arranged between the input/output terminals and comprising an AC-AC bridge; and a second active bridge circuit comprising an AC-DC bridge; and an interlinking connection between the output of the first active bridge circuit and the second active bridge circuit, wherein the interlinking connection comprises an inductive energy storage device in series connection between the first active bridge circuit and the second active bridge circuit.

2. The electronic inductor circuit of claim 1, wherein the second active bridge circuit comprises a full bridge.

3. The electronic inductor circuit of claim 1 or 2, wherein the second active bridge circuit comprises with four uni-directional switches each paired with an anti-parallel diode.

4. The electronic inductor circuit of claim 1, 2 or 3, wherein the second active bridge circuit comprises a capacitive energy storage element at its output side, arranged to maintain DC potential at the output side of the second active bridge circuit.

5. The electronic inductor circuit of any preceding claim, wherein the first active bridge circuit comprises a half bridge.

6. The electronic inductor circuit of any preceding claim, wherein the first active bridge circuit comprises with two bi-directional switches.

7. The electronic inductor circuit of any preceding claim, wherein the first active bridge circuit comprises paired capacitive energy storage elements at its input side, in parallel with the two bi-directional switches.

8. The electronic inductor circuit of any preceding claim, further comprising a controller arranged to in use control switching operations of the switches in the first active bridge circuit and the second active bridge circuit.

9. A power conversion system including an electronic inductor circuit as set out in any one of claims 1 to 8.

10. The power conversion system of claim 9, wherein comprising a DC link between an input supply and a load, and with the electronic inductor circuit provided as a series element on the DC link.

11. The power conversion system of claim 9 or 10, comprising a passive front end between an AC grid and the DC link.

12. A method of operating an electronic inductor, the method comprising use of an electronic inductor circuit as set out in any one of claims 1 to 8.

13. The method of claim 12, comprising operating the first active bridge circuit and second active bridge circuit under the control of a controller that outputs switching control signals with a fixed switching cycle period and fixed switching cycle duty ratio.

14. The method of claim 12 or 13, comprising operating the first active bridge circuit and the second active bridge circuit so that their switching cycles are phase shifted relative to each other.

15. The method of claim 12, 13 or 14, comprising controlling the phase difference between the switching cycles of the first active bridge circuit and the second active bridge circuit to thereby control the effective emulated inductance produced by the electronic inductor.

FIG 1  PRIOR ART

FIG 2A  PRIOR ART

FIG 2B   PRIOR ART

$S_1, S_2$

$V_{in}{}^+$   L   D

$S_1$

$S_2$

$V_{dc}{}^+$

FIG 2C   PRIOR ART

$V_{in}{}^+$   L   $D_1$   $T_2$

$T_1$   $D_2$

$V_{dc}{}^+$

# FIG 3A

EP 3 633 836 A1

FIG 3B

FIG 4

310

330
L

320

i₁

V₁

30

VA

VB

i₂

V₂

Phase shift φ

FIG 5

310

330
L

320

+

VA

iL

+

VB

## FIG 6

## FIG 7

## FIG 8

Europäisches
Patentamt

European
Patent Office

Office européen
des brevets

# EUROPEAN SEARCH REPORT

Application Number

EP 18 19 8324

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KR 2003 0003606 A (POSTECH FOUNDATION [KR]) 10 January 2003 (2003-01-10) | 1-5,12 | INV. H02M1/15 H02M5/458 H02M1/12 |
| A | * figure 3 * * page 3 * | 6-11, 13-15 | |
| A | POOYA DAVARI ET AL: "A review of electronic inductor technique for power factor correction in three-phase adjustable speed drives", 2016 IEEE ENERGY CONVERSION CONGRESS AND EXPOSITION (ECCE), 1 September 2016 (2016-09-01), pages 1-8, XP055565143, DOI: 10.1109/ECCE.2016.7854767 ISBN: 978-1-5090-0737-0 * figure 1 * | 1-15 | |
| A | ERTL H ET AL: "A Constant Output Current Three-Phase Diode Bridge Rectifier Employing a Novel Electronic Smoothing Inductor", IEEE TRANSACTIONS ON INDUSTRIAL ELECTRONICS, IEEE SERVICE CENTER, PISCATAWAY, NJ, USA, vol. 52, no. 2, 1 April 2005 (2005-04-01), pages 454-461, XP011129546, ISSN: 0278-0046, DOI: 10.1109/TIE.2005.843910 * figure 4 * | 1-15 | TECHNICAL FIELDS SEARCHED (IPC) H02M H03H |

The present search report has been drawn up for all claims

| Place of search | Date of completion of the search | Examiner |
|---|---|---|
| The Hague | 6 March 2019 | Riehl, Philippe |

## ANNEX TO THE EUROPEAN SEARCH REPORT
## ON EUROPEAN PATENT APPLICATION NO.

EP 18 19 8324

This annex lists the patent family members relating to the patent documents cited in the above-mentioned European search report.
The members are as contained in the European Patent Office EDP file on
The European Patent Office is in no way liable for these particulars which are merely given for the purpose of information.

06-03-2019

| Patent document cited in search report | Publication date | Patent family member(s) | Publication date |
|---|---|---|---|
| KR 20030003606 A | 10-01-2003 | NONE | |

For more details about this annex : see Official Journal of the European Patent Office, No. 12/82